# EUROPEAN PATENT APPLICATION

(11) **EP 1 772 261 A1**
(43) Date of publication of application: **11.04.2007**
(21) Application number: 05745627.9
(22) Date of filing: 31.05.2005
(51) Int. Cl.: B32B 33/00

(54) **LAMINATED MOLDING PRODUCT**

(30) Priority: 31.05.2004 JP 2004161470
(71) Applicant: Yoshino Kogyosho Co., Ltd., Tokyo 136-8531 (JP)
(72) Inventor: AKIYAMA, Yoshio, YOSHINO KOGYOSYO CO., LTD., Tochigi-shi, Tochigi 3280125 (JP); ISHIYAMA, Shinichi, YOSHINO KOGYOSYO CO., LTD., Tochigi-shI, Tochigi 3280125 (JP)
(74) Representative: Gray, James
(86) International application number: PCT/JP2005/009981
(87) International publication number: WO 2005/115755

(57) **Abstract**

A laminated molded body is produced by coextrusion of plural types of resin materials and includes a main body (1) and, superimposed on its surface, a decorative layer (2) and a surface layer (3). The decorative layer (2) includes, in lamination with each other, a colored film (2a) of a colored resin material and a brightening film (2b) of a resin material capable of brightening the colored film (2a). Among these films, the colored film (2a) has a thickness that changes in a stepless or stepwise manner, and such a transparency that the bright film (2b) disposed inside can be observed therethrough, allowing the colored film (2a) to be observed in a bright state on the surface of the main body (1).

## Description

### TECHNICAL FIELD

The present invention relates to a laminated molded body, such as a preform for blow molding process, a direct-blow molded bottle, etc., which can be obtained by coextruding plural types of synthetic resin materials.

### BACKGROUND ART

As containers made of synthetic resin for accommodating cosmetics or the like therein, there have been numerously used molded articles such as those obtained by injection molding or blow molding of synthetic resins, from the standpoint of suitability for mass-production and reduced manufacturing cost. In order to enhance the aesthetic appearance of the blow molded articles, there has been recently adopted a technology to afford a variation in color shading to a container, and thereby achieve a so-called gradation effect, i.e., a visual effect for enhancing the decorative effect of the container.

Generally, gradation effects in the appearance of containers are achieved by ornamental films or paintings. In this instance, however, additional production steps are inevitably required, so that the productivity is lowered and the production cost increases.

It may be considered feasible to previously provide, upon extrusion of a semi-translucent colored resin, the parison with a difference in wall thickness, so that the molded article obtained by subsequent blow molding has a locally different thickness. However, it would be then difficult to control the thickness upon blow molding since, due to the thickness difference in the *parison, per se,* it is inevitable for the blow molded article to have a similar thickness distribution as the parison. Further, the thin-walled portion of the blow molded article not only degrades the rigidity and adversely affects the strength of the container, but also permits transmission of gas (such as oxygen) from the exterior into the container, thereby shortening the quality assurance period (i.e., shelf life) of the contents.

In order to overcome these problems, the applicant proposed a laminated molded body produced by coextrusion of plural types of resin materials, and including at least one layer in the form of a colored layer, of which the thickness changes in a stepless or stepwise manner, as seen in a predetermined direction with reference to the extrusion direction of the resin materials (see, WO 2004/022307 A1). With such a proposal, it is possible to easily and positively obtain a laminated bolded body without the above-mentioned problems of the prior art, by controlling, upon coextrusion, the supply volume of the resin material forming the colored layer. Furthermore, by changing the thickness of the resin material forming the colored layer in the predetermined direction, it is possible to achieve a gradation effect wherein the color shading changes in the predetermined direction in a stepless or stepwise manner.

### DISCLOSURE OF THE INVENTION

It is an object of the present invention to further improve the laminated molded body according to the applicant's proposal described above, in such a manner as to further enhance the aesthetic appearance by enhancing not only the gradation effect but also in terms of color, while achieving reduction of production steps and cost.

According to the present invention, there is provided a laminated molded body produced by coextrusion of plural types of resin materials, and including a main body and, superimposed on its surface, a decorative layer and a surface layer, wherein the decorative layer includes, in lamination with each other, a colored film of a colored resin material and a brightening film of a resin material capable of brightening the colored film, and wherein the colored film has a thickness that changes in a stepless or stepwise manner and such a transparency that the brightening film disposed on an inner side can be observed therethrough, allowing the colored film to be observed in a bright state on the surface of the main body.

In the present invention, in order that the film situated on the outer side exhibits transparency, there is used a transparent or semi-transparent material as the resin material of that film. The colored film may be of a single color or a mixed color. The material of the brightening film may be suitably selected from a resin material containing a brightening agent, a resin material containing a pearl-like material reflecting light and exhibiting a pearly luster, and a resin material containing a powder material reflecting light and exhibiting a metallic luster, provided that it is a resin material capable of brightening the colored film. Among the colored film and brightening film laminated with each other, the film arranged on the outer side has a thickness that changes along the predetermined direction in stepless or stepwise manner. Thus, when the thickness of the outer film is changed in a direction parallel to the extrusion direction, for example, the shading of the color changes in the direction parallel to the extrusion direction. Also, when the thickness of the outer film is changed in a direction intersecting the extrusion direction, the shading of the color changes in the direction intersecting the extrusion direction.

According to the present invention, it is preferred that among the colored film and brightening film, the film situated on the outer side has a thickness that varies within a range of 50% with reference to the thickness of the laminated molded body.

The laminated molded body according to the present invention may be a preform for blow molding process, a direct-blow molded bottle, a tube, or a blow molded tube.

According to the present invention, among the colored film and brightening film, the film situated on the inner side is visible through the film on the outer side so as to exhibit an appearance wherein the colored film appears to be bright on the surface of the main body. In addition, among the colored film and brightening film, the film arranged on the outer side has a thickness that changes along the predetermined direction in stepless or stepwise manner as described above, so as to achieve a gradation effect wherein the color shading of the colored film changes in stepless or stepwise manner. With such an arrangement, the aesthetic appearance is significantly enhanced due to the gradation effect capable of brightening the color, and the color variations can be increased in addition to the gradation effect, by suitably combining the colored film and the brightening film from a wide variety of candidates.

According to the present invention further more, it is possible to easily and positively obtain a laminated bolded body with a further enhanced aesthetic appearance by controlling, upon coextrusion, the supply volume of the resin material forming the colored film, and the supply volume of the resin material forming the brightening film. With such an arrangement, as compared to the case wherein the similar effects are obtained by ornamental films or paintings, it is possible to improve the working efficiency due to the reduced production steps, and achieve a cost reduction due to the reduced occurrence of defective products or improvement in the production efficiency.

### BRIEF DESCRIPTION OF THE DRAWINGS

FIG 1 is a sectional view showing one embodiment of the laminated molded body in the form of a blow molded three-layered bottle-type container;
FIGS. 2(a) and 2(b) are enlarged sectional views showing an enlarged view of FIG 1 and its variation, respectively;
FIGS. 3(a) and 3(b) are enlarged sectional views showing variations in which the structure of FIGS. 2(a) and 2(b) are applied to a blow molded four-layered bottle-type container;
FIGS. 4(a) and 4(b) are enlarged sectional views showing variations in which the structure of FIGS. 2(a) and 2(b) are applied to a blow molded five-layered bottle-type container;
FIGS. 5(a) and 5(b) are enlarged sectional views showing variations in which the structure of FIGS. 2(a) and 2(b) are applied to a blow molded seven-layered bottle-type container;
FIGS. 6(a) and 6(b) are enlarged sectional views showing variations in which the structure of FIGS. 2(a) and 2(b) are applied to a blow molded eight-layered bottle-type container;
FIGS. 7(a) and 7(b) are enlarged sectional views showing variations in which the structure of FIGS. 2(a) and 2(b) are applied to a blow molded nine-layered bottle-type container;
FIG 8 is a side view showing a blow molded three-layered bottle-type container according to another embodiment of the present invention;
FIGS. 9(a) and 9(b) are planar development views along the section B-B in FIG 8; and
FIG 10 is a side view showing a blow molded three-layered bottle-type container according to still another embodiment of the present invention.

### BEST MODE FOR CARRYING OUT THE INVENTION

The present invention will be described below with reference to certain preferred embodiments shown n the accompanying drawings.

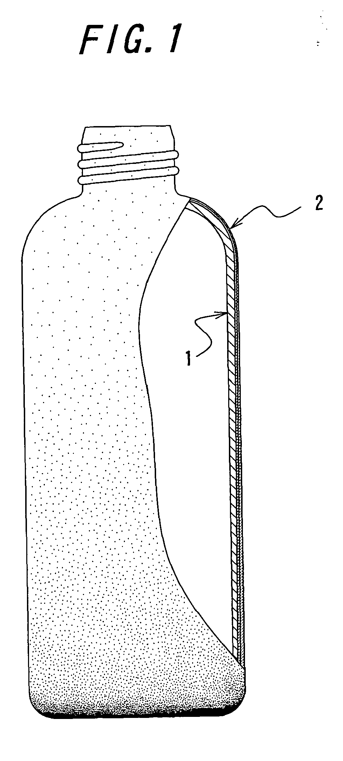

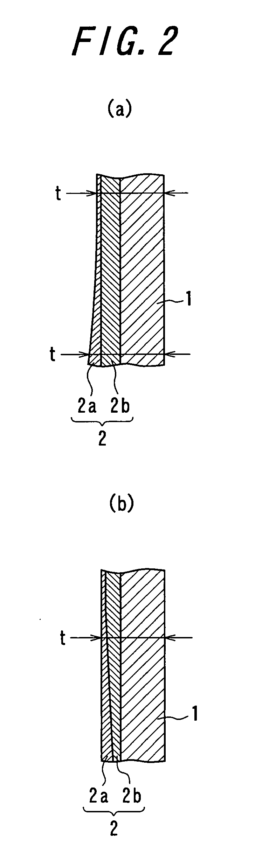

In FIG 1 and FIG 2(a), reference numeral 1 denotes a main body portion as the innermost layer, and 2 denotes an ornament layer that is arranged integrally on the outer side of the main body portion 1. As shown in FIG 2(b), the ornament layer 2 is comprised of a colored film made of a colored resin material, and a brightening layer 2b made of a resin material that brightens the colored layer 2a, wherein the films 2a and 2b are laminated with each other. The colored film 2a has a transparency such that the film situated on the inner side is visible through the colored film. More concretely, the film situated on the outer side, i.e., the colored film 2a, is either made to have a reduced thickness, or made of a transparent or semi-transparent, colored resin material. I particular, if the colored film 2a is made to have a reduced thickness, it is preferred for the thickness to be within a range of 50% of the entire thickness of the laminated molded body as a whole. For example, if the total thickness "t" is 1.4 mm, the thickness of the colored film 2a is preferably not larger than 700 µm. By this, since the brightening film 2b situated on the inner side of the colored film 2a is visible through the colored film 2a, the colored film 2a is visible as being bright on the surface of the main body portion 1.

In the illustrated embodiment, furthermore, only the thickness of the colored film 2a is continuously changed in a direction parallel to the extrusion direction so that, as shown in FIG 2(a), the thickness of the colored film 2a increases from the mouth portion to the bottom portion of the molded article. In this instance, the color shading becomes deep as the thickness increases, and light as the thickness decreases. Thus, the colored film 2a has color shading that becomes progressively deep from the mouth portion to the bottom portion of the molded article, to exhibit a unique gradation effect wherein the color has such shading that it becomes progressively deep from the mouth portion to the bottom portion. Such an arrangement makes it possible to significantly improve the aesthetic appearance due to the gradation effect that brightens the color, and not only provides a wide variety of gradation effects, but also increases the variations in terms of color by combining selected colored film 2a and brightening film 2b out of various candidates.

The material for the main body portion and the colored film 2a may be suitably selected from olefin-based resin such as polyethylene resin, polypropylene resin or the like; polyester resin such as polyethylene terephthalate resin (PET) or the like; and ethylene vinyl alcohol copolymer (EVOH), nylon or the like, as a barrier resin. As for the main body portion l, in particular, there may be used a regenerated material originating from discarded materials obtained in other processes.

The material of the brightening film 2b may be suitably selected from a resin material containing a brightening agent, a resin material containing a pearl-like material reflecting light and exhibiting a pearly luster, and a resin material containing a powder material reflecting light and exhibiting a metallic luster, provided that it is a resin material capable of brightening the colored film. For example, if the brightening film 2b is comprised of a resin material containing a pearl-like material reflecting light and exhibiting a pearly luster, the pearl-like material may be a single color pearl material having a golden color, silver color or the like, a polarizing pearl having an iridescent color, mica, silica, etc. Further, if the brightening film 2b is comprised of a resin material containing a powder material reflecting light and exhibiting a metallic luster, the powder material may be a metal material such as fine aluminum or the like (including leaf or foil of gold), and silica or the like.

For molding such a container, there may be used a multi-layer coextrusion die of a type wherein different resin materials are merged simultaneously, or a type wherein they are merged sequentially.

The laminated molded body of the structure described above can be molded by using a coextrusion die having a flow passage for supplying a resin material corresponding to the main body portion 1 as the inner layer, and flow passages for supplying resin materials corresponding, respectively, to the colored film 2a and brightening film 2b, which are arranged on the outer side of the main body portion 1, and by coextruding these resin materials. Upon coextrusion, as shown in FIG. 2(a), the extrusion volume of the resin materials is controlled so that the main body portion 1 and the brightening film 2b each has a thickness that is constant from the mouth portion to the bottom portion of the molded article, while the colored film 2a has a thickness that increases from the mouth portion to the bottom portion, and the laminated molded body as a whole has a total thickness "t" that increases toward the bottom portion. As a result, it is possible to provide a depth in the color shading due to the total thickness "t" of the laminated molded body, which increases toward the bottom portion, and there is no extreme change in thickness except for local thickness variation due to the shape of the product.

The laminated molded body of the structure described above can be obtained easily and positively by controlling, upon coextrusion, the supply volume of the resin material forming the colored film 2a and the resin amount forming the brightening film 2b, as a product having an improved aesthetic appearance. With such a structure, it is possible to achieve such advantages, in addition to those of the case wherein ornament film or paintings are applied to obtain similar effects, as improved working efficiency due to reduced production steps, and cost reduction due to the reduced defects ratio or improved productivity.

A variant of the above-mentioned embodiment is shown in FIG. 2(b), wherein the same elements are denoted by the same reference numerals to eliminate superfluous description.

In the illustrated variant, in addition to the colored film 2a, the thickness of the brightening film 2a also is continuously changed in a direction parallel to the extruding direction, so that the thickness of the colored film 2a increases from the mouth portion to the bottom portion of the molded article, while the thickness of the brightening film 2b decreases from the mouth portion to the bottom portion. In other words, the main body portion 1 as the inner layer has a thickness that is constant from the mouth portion to the bottom portion of the molded article, and the brightening film 2b has a thickness that decreases as the thickness of the colored film 2a increases, so that the laminated molded body has a substantially constant thickness as a whole. Thus, the colored film 2a has color shading that becomes progressively deep from the mouth portion to the bottom portion of the molded article, to exhibit a unique gradation effect wherein the color has such shading that it becomes progressively deep from the mouth portion to the bottom portion. Such an arrangement makes it possible to further improve the aesthetic appearance due to the gradation effect that brightens the color, and not only provides a wide variety of gradation effects, but also increases the variations in terms of color by combining selected colored film 2a and brightening film 2b out of various candidates.

For molding such a container also, there may be used a multi-layer coextrusion die of a type wherein different resin materials are merged simultaneously, or a type wherein they are merged sequentially.

The laminated molded body of the structure described above, too, can be molded by using a coextrusion die having a flow passage for supplying a resin material corresponding to the main body portion 1 as the inner layer, and flow passages for supplying resin materials corresponding, respectively, to the colored film 2a and brightening film 2b, which are arranged on the outer side of the main body portion 1, and by coextruding these resin materials. Upon coextrusion, as shown in FIG 2(b), the extrusion volume of the resin materials is controlled so that the main body portion 1 has a thickness that is constant from the mouth portion to the bottom portion of the molded article, while the brightening film 2b has a thickness that decreases as the colored film 2a has a thickness that increases from the mouth portion to the bottom portion so that the laminated molded body as a whole has a total thickness "t" that increases toward the bottom portion. As a result, there is no extreme change in thickness except for local thickness variation due to the shape of the product.

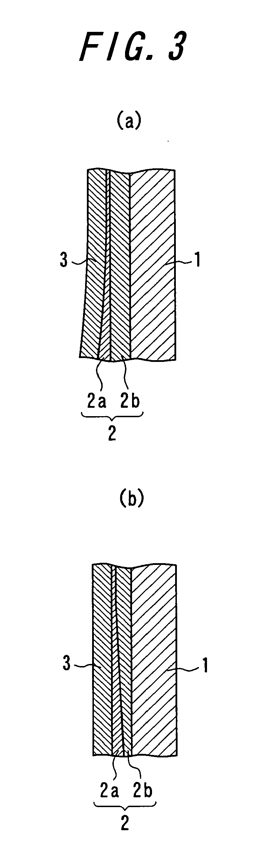

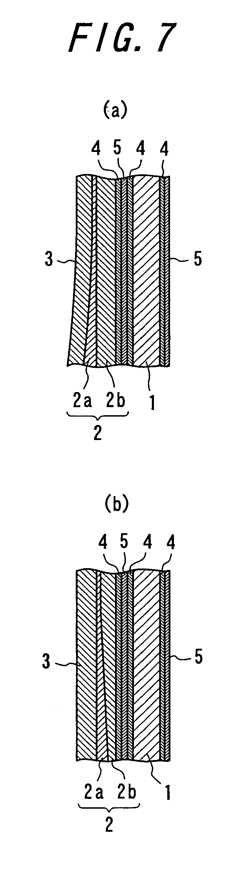

Some variants of the laminated molded body will be described below with reference to FIGS. 3(a), 3(b) through FIGS. 7(a), 7(b), wherein the basic structures shown in FIGS. 2(a), 2(b) are applied, respectively, to blow molded articles of four-layered structure, five-layered structure, seven-layered structure, eight- layered structure and nine-layered structure.

First of all, as shown in FIGS. 3(a) and 3(b), a surface layer 3 comprised of a luster material or a defrosting material mat be provided on the outer side of the ornament layer 2, so as to provide variation in color tone, in addition to the variation in color shading.

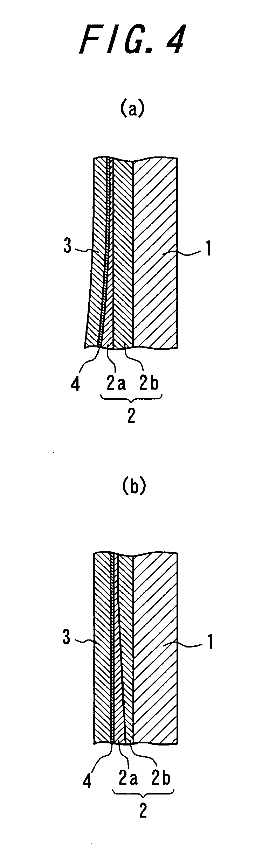

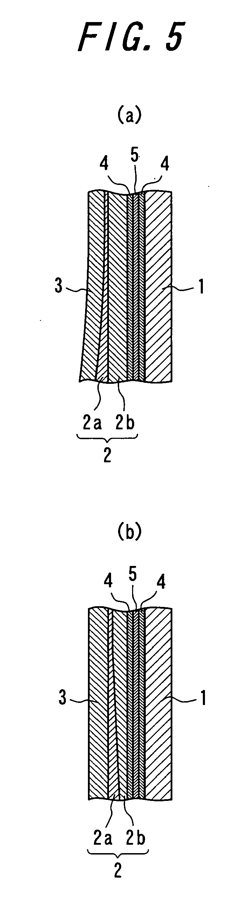

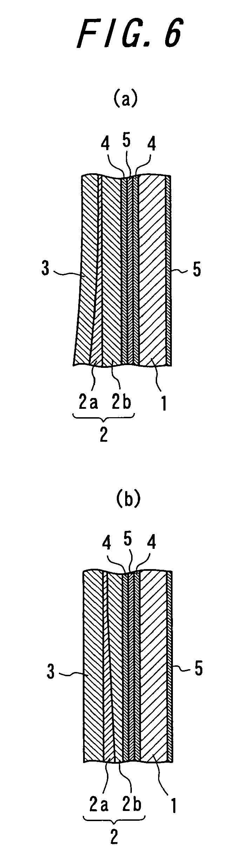

Furthermore, as exemplarily shown in FIGS. 4(a), 4(b) through FIGS. 7(a), 7(b), various combinations are possible, which are provided with at least one adhesive layer 4 and at least one barrier layer 5 for suppressing transmission of oxygen, and comprised of EVOH, polyamide containing meta-xylylene group, or the like. In the variants shown in FIGS. 4(a) and 4(b), an adhesive layer 4 is arranged between the ornament layer 2 and the surface layer 3 according to the variants of FIGS. 3(a) and 3(b). In the variants shown in FIGS. 5(a) and 5(b), there are successively arranged an adhesive layer 4, a barrier layer 5 and another adhesive layer 4, between the main body portion 1 as an inner layer and the colored layer 2 in the embodiments of FIGS. 2(a) and 2(b). In the variants shown in FIGS. 6(a) and 6(b), there is arranged a further barrier layer 5 on the inner side of the main body portion 1 as the inner layer of the variants of FIGS. 5(a) and 5(b). In the variants shown in FIGS. 7(a), 7(b), a further adhesive layer 4 is arranged between the main body portion 1 and the barrier layer 5 on its inner side. Moreover, other than the above-mentioned layers, it is also possible to provide a layer containing known oxygen absorbent. The constitution of the layers can be appropriately modified depending upon usage, and the present invention is not particularly limited in this respect.

It is preferred that the colored film 2a or brightening film 2b has a thickness changes within a range of 50% of the total thickness of the laminated molded body, in view of the wall thickness variability and the appearance of the colored film 2a or brightening film 2b. It is possible to realize a wide variety of gradation effects by varying the thickness of the colored film. For example, there may be adopted an adjacent type laminated layer arrangement by forming the main body portion 1 also as a colored layer, and laminating such main body portion 1 with the primary colored layer 2, so as to enlarge the selection range in terms of the gradation effects exhibiting pearly luster or metallic luster.

In a laminated layer arrangement wherein the laminated molded body includes a plurality of ornament layers 2, it is possible to adopt, besides the adjacent type laminated layer arrangement, a separated type laminated layer arrangement wherein adhesive layer 4, or a barrier layer 5, or a surface layer 6 is arranged between the ornament layers 2, so as to enlarge the selection range in terms of the gradation effects exhibiting the desired type of luster.

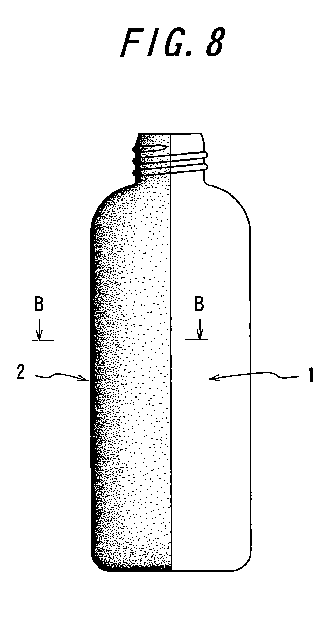

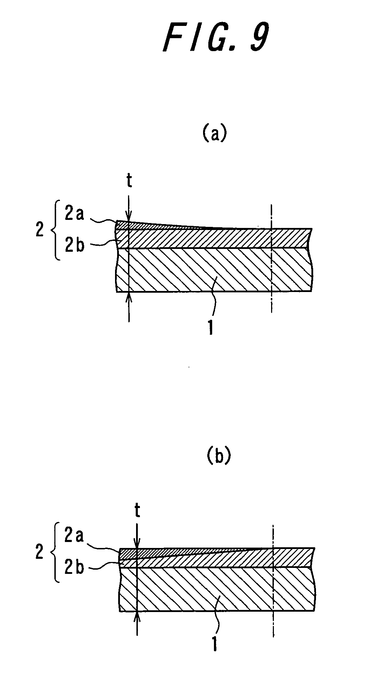

FIG 8 shows a three-layered bottle type container in the form of a blow molded article as another embodiment of the laminated molded body according to the present invention, and FIGS. 9(a) and 9(b) are planar development views along the section B-B in FIG 8, wherein the same elements as those shown in FIGS. 1 and 2 are denoted by the same reference numerals to eliminate superfluous description.

In the present embodiment, the main body portion 1 is provided with the colored layer 2 only over a half periphery of the main body portion 1 in its circumferential direction, and is not provided with such colored layer 2 over the remaining half periphery. The colored layer 2 is arranged on the outer side of the main body portion 1, integrally with each other. As shown in FIG 9, the colored layer 2 has a thickness that is gradually increased from one end portion toward a central portion, and gradually reduced from the central portion toward the other end portion. Thus, the colored layer 2 exhibits a gradation effect in the circumferential direction, wherein the color tone of the colored layer 2 is deepened from the one end portion toward the central portion, and lightened from the central portion toward the other end portion.

The laminated molded body shown in FIG 8 and FIG 9 can be molded, for example, by adopting a substantially crescent shape for the cross-sectional shape of the flow passage at a location where the resin material corresponding to the main body portion 1 as the inner layer is merged with the resin material corresponding to the colored layer 2. Furthermore, if an appropriate controlling means is provided for increasing or decreasing, with the lapse of time, the cross-sectional area of the flow passage at the merging location, it becomes possible to appropriately increase or decrease the thickness of the colored layer 2 not only in the direction intersecting the extruding direction, but also in a direction parallel to the extruding direction, thereby making it possible to realize a wide variety of gradation patterns.

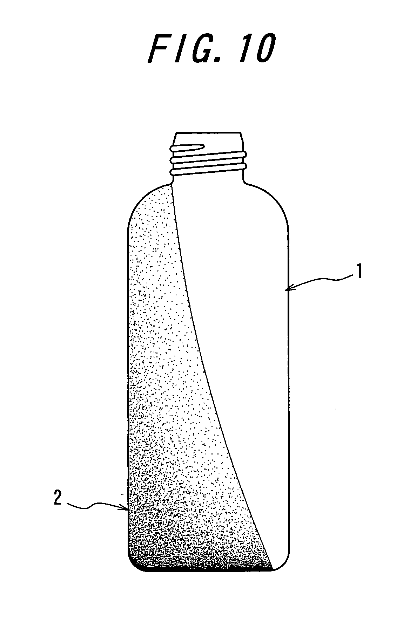

Still another embodiment of the present invention is shown in FIG 10, wherein the thickness of the colored layer 2 is increased and decreased in two directions, including one direction intersecting the extruding direction, and another direction parallel to the extruding direction.

It will be appreciated from the foregoing description that, according to the present invention, it is possible to easily and positively obtain a laminated molded body having an improved aesthetic appearance, simply by adjusting, upon coextrusion, the supply volume of the resin material forming the colored layer. Further, even when the thickness of the colored layer is varied, the total thickness "t" of the laminated molded body is made substantially constant. Thus, it is possible to prevent formation of locally thin-walled or thick-walled regions, to realize a molded article having a stable quality in terms of the strength, and provide laminated molded body having an enhanced gradation effect and capable of suppressing increase in cost.

Although the present invention has been explained above with reference to the preferred embodiments, it is apparent that the present invention may be carried out in various configurations other than those described above, without departing from the scope of the present invention.

Thus, for example, among the colored film 2a and the brightening film 2b, the colored film 2a is situated on the outer side in the embodiments described above. However, a modification may be made so as to arrange the brightening film 2b on the outer side, wherein the brightening film 2b has such a transparency as to allow the colored film 2a on the inner side to be visible therethrough, and a thickness that changes in continuous or stepless manner or stepwise manner.

The laminated molded body according to the present invention may be advantageously applied, not only to a blow molded preform for a biaxial-stretching blow molding process, or a bottle obtained by a direct blow molding process with respect to coextruded parisons, but also to a body portion of a container, such as a direct blow molded tube, a laminated tube or the like, and to covers for home electric appliances, such as television, personal computers or the like.

## Claims

1. A laminated and molded body produced by coextrusion of plural types of resin materials, and including a main body and, superimposed on its surface, a decorative layer and a surface layer, wherein:
the decorative layer includes, in lamination with each other, a colored film of a colored resin material and a brightening film of a resin material capable of brightening the colored film, and the colored film has a thickness that changes in a stepless or stepwise manner and such a transparency that the brightening film disposed on an inner side can be observed therethrough, allowing the colored film to be observed in a bright state on the surface of the main body.

2. The laminated molded body according to claim 1, wherein said brightening film contains a pearl material reflecting light and exhibiting a pearly luster.

3. The laminated molded body according to claim 1, wherein said brightening film contains a powder material reflecting light and exhibiting a metallic luster.

4. The laminated molded body according to any one of claims 1 to 3, wherein, among said films, the film situated on the outer side has a thickness that varies within a range of 50% with reference to the thickness of the laminated molded body.

5. The laminated molded body according to any one of claims 1 to 4, wherein said laminated molded body is one of a preform for blow molding process, a direct-blow molded bottle, a tube and a blow molded tube.
